# EUROPEAN PATENT SPECIFICATION

(11) **EP 4 215 943 B1**
(45) Date of publication and mention of the grant of the patent: **18.11.2026**
(21) Application number: 22162510.6
(22) Date of filing: 16.03.2022
(51) Int. Cl.: G01S 13/931, G01S 13/72

(54) **METHOD AND APPARATUS FOR TRACKING A POLYLINE, ADVANCED DRIVER ASSISTANCE SYSTEM AND AUTONOMOUS VEHICLE**
VERFAHREN UND VORRICHTUNG ZUR ZIELVERFOLGUNG MITTELS EINES POLYGONS, ERWEITERTES FAHRERASSISTENZSYSTEM UND AUTONOMES FAHRZEUG
PROCÉDÉ ET APPAREIL DE SUIVI AU MOYEN D'UNE POLYLIGNE, SYSTÈME AVANCÉ D'AIDE À LA CONDUITE ET VÉHICULE AUTONOME

(30) Priority: 25.01.2022 IN 202231004127
(43) Date of publication of application: 26.07.2023
(73) Proprietor: AUMOVIO Autonomous Mobility Germany GmbH, 85057 Ingolstadt (DE)
(72) Inventor: Muralidhar, Bijesh Komanthakkal, 90411 Nürnberg (DE); Das, Debashish, 90411 Nürnberg (DE)
(74) Representative: Aumovio Corporation

(56) References cited:
- EP-A1- 3 032 273
- EP-A1- 3 318 890

## Description

### TECHNICAL FIELD

The present invention relates to a method and an apparatus for tracking a polyline. The present invention further relates to an advanced driver assistance system with an apparatus for tracking a polyline and an autonomous vehicle with such an advanced driver assistance system.

### BACKGROUND

Modern vehicles such as cars or trucks more and more comprise systems for assisting a driver or for fully autonomous driving the vehicle. For this purpose, reliable information relating to the environment of the vehicle, in particular the boundaries of a driving path, are required. For this purpose, the vehicle may comprise one or more sensors for sensing the environment. The signals or data provided by these sensors may be processed in order to determine a driving path and identify boundaries of the driving path.

For example, radar sensors may be used for sensing the environment and identifying objects around the vehicle. For this purpose, the radar sensor may emit a signal which is reflected by an object in the environment of the vehicle. The reflected signal is received by the radar sensor in order to determine a position and/or distance-of the object. However, the quality of the identified objects may depend on the reflection properties of the object. For example, an object or a part of an object may appear or disappear depending on the orientation of an outer surface of the object with respect to the sensor.

EP3032273A1 generally discloses an on-board radar apparatus and a region detection method with the aim of stably tracking an object, using previous detections to substitute for missing object points in subsequent measurements.

EP 3318890A1 discloses technique(s) to map and characterize the environment with respect to a vehicle, using polylines with line segments for object tracking with a rectangular box per line segment being oriented along, i.e. parallel to, its extension direction and being centred by the line segement, the rectangluar box representing a measure of dispersion of detections around the line segment.

In view of this, there is a need for an improved determination of borderlines specifying a driving path. In particular, there is a need for an improved determination and processing of a polyline, e.g., a polyline specifying a border of a driving path for a vehicle.

### SUMMARY OF THE INVENTION

The present invention therefore provides a method and an apparatus for tracking a polyline, an advanced driver assistance system (ADAS) and an autonomous vehicle with the features of the independent claims. Further advantageous embodiments are subject matter of the dependent claims.

According to a first aspect, a method for tracking a polyline is provided. The method comprises steps of obtaining segments relating to a current polyline. The method further comprises a of step of assigning virtual boxes along the obtained segments of the current polyline. Further, the method comprises a step of merging the virtual boxes relating to the line segments of the current polyline and virtual boxes relating to a previous polyline. Accordingly, a set of merged virtual boxes is obtained. Finally, the method comprises a step of processing a current polyline based on the set of merged virtual boxes.

According to a further aspect, an apparatus for tracking a polyline is provided. The apparatus comprises a processing device and a memory. The processing device configured to receive segments of a current polyline. The processing device is further configured to assign virtual boxes along the received segments of the current polyline. Further, the processing device is configured to merge the virtual boxes relating to the line segments of the current polyline and virtual boxes relating to a previous polyline. Accordingly, a set of merged virtual boxes is obtained. Further, the processing device is configured to generate a current polyline based on the set of merged virtual boxes. The memory is configured to store and provide data of virtual boxes, in particular virtual boxes of previous polylines.

According to a further aspect, an advanced driver assistance system is provided. The advanced driver assistance system comprises a sensor device, an apparatus for tracking a polyline according to the previous aspect and a control device. The sensor is configured to acquire environmental data. The sensor is further configured to provide segments of a polyline. In particular, the sensor device is configured to provide the segments of a polyline based on the acquired environmental data. The control device is configured to control at least one driving functionality of a vehicle. In particular, the driving functionality is controlled based on the current polyline which is provided by the apparatus for tracking the polyline.

According to still a further aspect, an autonomous vehicle is provided. The autonomous vehicle may comprise an apparatus for tracking polylines or an advanced driver assistance system according to one of the previous aspects. The present invention is based on the finding that a detection or identification of objects in an environment of a sensor may depend on many circumstances. For example, an orientation of a surface of an object with respect to the sensor may change when the sensor and/or the object is moving. Accordingly, an object or at least a part of an object may appear or disappear depending on the position of a sensor with respect to the object.

However, fully or partially autonomous vehicles and advanced driver assistance systems (ADAS) require a reliable knowledge of objects in the environment of a vehicle and a reliable knowledge of borderlines specifying a driving path for the vehicle.

For this purpose, the present invention aims to provide a tracking of a polyline specifying a boundary of a driving path or a drivable area. A polyline may be considered as a line with a start point, an end point and a number of one or more intermediate nodes, wherein the individual nodes are connected with each other by line elements. In this way, it is possible, to specify a boundary of a drivable path for a vehicle by such polylines.

In order to obtain an improved and stabilized result of a polyline, the present invention provides an approach which considers not only identified elements of a current detection cycle but also historical information of previous detection cycles. In this way it is possible to compensate a temporal disappearance of objects or elements, for example due to a change of orientation.

In particular, the present invention provides an approach which considers not only the nodes and/or edges of a polyline. Moreover, the present invention proposes to arrange virtual boxes, i.e., squares or rectangles having a predetermined size along segments of a current polyline. Accordingly, such a configuration with boxes along the segments of a current polyline is merged with virtual boxes of previous cycles. In this way, temporarily disappearing elements may be compensated by the respective boxes of the previous cycles.

In order to further take into account moving objects and objects which are disappearing, a counter or weight factor may be implemented and assigned to each virtual box. Accordingly, such a counter or weight factor may be used to remove boxes relating to disappearing elements.

The size of the virtual boxes, i.e., the length and width of the squares or rectangles may be set according to the respective use case. For example, virtual boxes with squares having a size of one meter may be used for tracking the polylines of a vehicle. However, it is understood that depending on the use case any other size or shape may be possible, too.

The outcome of the polyline tracking may be used, for example, as input for an ADAS or any other system for fully or at least partially driving a vehicle. However, it is understood, that any other use case for the outcome of the polyline tracking may be possible, too.

In a possible embodiment, each virtual box has a same predetermined size. As already mentioned above, the virtual boxes may be squares or rectangles. Preferably, squared shaped virtual boxes may be used. Depending on the use case, an appropriate size may be used. For example, squared virtual boxes with a size of one meter may be used for processing borderlines of a driving path for a vehicle. However, any other appropriate size or shape may be used.

According to the invention as claimed, the virtual boxes are oriented according to a direction of a corresponding segment of the current polyline. A center of a box is located on the respective segment of a current polyline and edges of a square or rectangle are oriented parallel to the respective line segment, and the remaining two edges are perpendicular to the line segment. The individual boxes may be located such that adjacent boxes are touching each other or are slightly overlapping each other, for example by a predetermined area.

According to the invention as claimed, the merging of the virtual boxes comprises combining the virtual boxes relating to the line segments of the current polyline and the virtual boxes relating to the previous polyline. Further, the merging step may comprise identifying virtual boxes relating to the previous polyline which are overlapping with virtual boxes relating to the line segments of the current polyline. The merging step may further comprise a step of removing the identified virtual boxes relating to the previous polyline which are overlapping with virtual boxes relating to the line segments of the current polyline. In other words, virtual boxes relating to previous polylines which may touch or overlap virtual boxes of current polyline segments are removed. Accordingly, virtual boxes of previous polylines are only used at areas where no boxes of a current polyline segment exist.

In a possible embodiment, an individual count value is assigned to each virtual box. The count value of a virtual box is increased each time a previous box is merged with the set of virtual boxes for a current cycle. Based on this count value of the individual boxes, a virtual box is removed from the set of merged virtual boxes if the count value of the respective virtual box exceeds a predetermined threshold value. Instead of count value it is also possible to assign a weight factor or the like in order to consider a number of times a previous box is merged together with boxes relating to line segments of a current polyline. In this way, it is possible that boxes from previous polylines are only merged in a current set of boxes if the respective boxes exist for a maximum number of previous cycles. Otherwise, such a virtual box is removed in the set of merged boxes for a current cycle.

In a possible embodiment, the processing of a current polyline comprises a step of generating a convex hull for a set of virtual boxes, a step of identifying a segment of the generated convex hull which is visible from a predetermined point of view and a step of generating the current polyline based on the set of virtual boxes and the identified segment of the generated convex hull which is visible from a predetermined point of view. The convex hull may be generated by connecting nodes within the set of virtual boxes in a way such that a closed polygon with a convex outer shape is obtained. Subsequently, the part of the convex hull which cannot be seen from a predetermined point of view, for example from a vehicle which is processing the data for an ADAS or the like, is removed. Accordingly, the remaining part of the convex hull represents the part which can be seen from the respective point of view. Subsequently, the current polyline can be generated by generating a polyline with nodes arranged in the virtual boxes of the set of merged virtual boxes.

In a possible embodiment, the step of generating the current polyline comprises a step of reshaping the generated convex hull according to the set of virtual boxes. As already mentioned above, the part of the convex hull which can be seen from a predetermined point of view may be taken as a basis, and subsequently, nodes of a current polyline may be arranged at appropriate positions relating to virtual boxes of the set of merged virtual boxes for a current cycle. In this way, the shape of the polyline is adapted according to the position of the virtual boxes.

In a possible embodiment, the method further comprises a step of determining a movement of a point of view between a point in time when the virtual boxes relating to the previous polylines are processed and a point in time when the segments of the current polyline are obtained. In other words, a movement of the system which processes the polyline is determined. For example, this movement may relate to the movement of a vehicle with the system for processing the polylines. This may be, for example, the movement of an ego-vehicle or the like. Further, the method may comprise a step of compensating a position of the virtual boxes relating to the previous polyline based on the determined movement. Accordingly, the position of the previously determined virtual boxes may be adapted according to the current position of the system processing the data.

### BRIEF DESCRIPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1:: shows a schematic diagram of a vehicle comprising an advanced driver assistance system with an apparatus for tracking polylines according to an embodiment;
- Fig. 2a, b:: schematic diagrams illustrating object detection for tracking polylines according to an embodiment;
- Fig. 3a-h:: diagrams illustrating an approach for tracking polylines according to an embodiment; and
- Fig. 4:: a flow chart illustrating a method for tracking polylines according to an embodiment.

### DESCRIPTION OF EMBODIMENTS

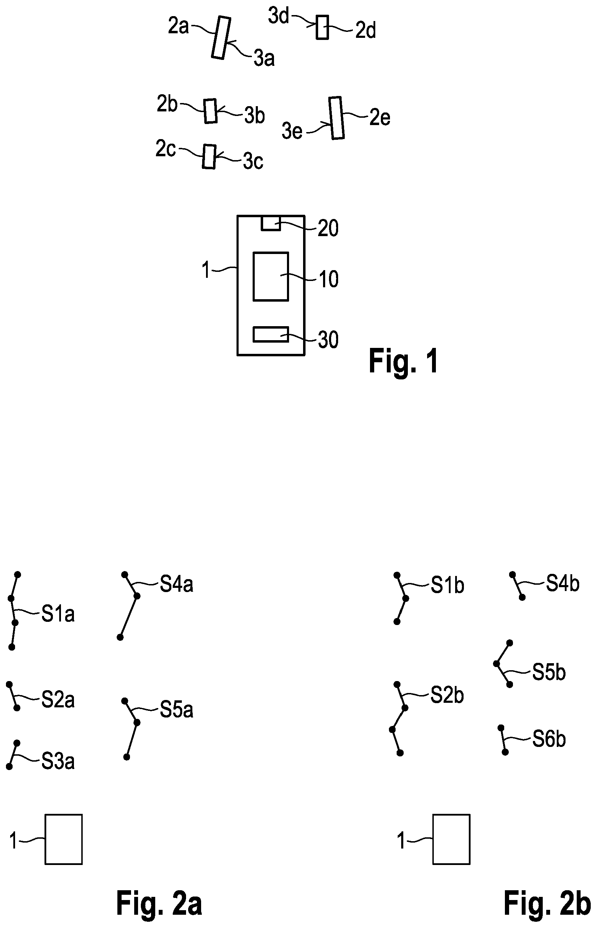

Figure 1 shows a schematic diagram illustrating a vehicle 1 with an apparatus 10 for tracking polylines according to an embodiment. The output of the apparatus 10 for tracking polylines may be used for a full or at least partial autonomous driving of the vehicle 1. For example, the output of the apparatus 1 for tracking polylines may be used by an advanced driver assistance system (ADAS). The polylines which are tracked by the apparatus 10 for tracking polylines may relate to borderlines of a driving path. In particular, the polylines may specify a path along objects at a possible driving path of a vehicle.

The vehicle 1 may comprise a sensor 20 for sensing an environment of the vehicle 1. For example, the sensor 20 may be a radar sensor, a camera or camera system, a LIDAR sensor or any other appropriate sensor for sensing objects in an environment of the vehicle 1. For example, the sensor or sensor system 20 may provide information specifying a distance and/or position of detected objects in the environment of the sensor 20. For this purpose, it may be possible that the sensor or sensor system 20 may provide information for specifying a number of points in the environment which may relate to objects. These points may be grouped together in an appropriate manner. In this way, it may be possible to determine an outer shape of a surface of an object. Such a processing may be performed in a two-dimensional or three-dimensional space. For example, figure 1 illustrates five detected objects 2a-2e illustrating such detected objects. In such an example, an outer surface of each object 2a-2e facing towards the driving path of the vehicle 1 may be represented by a segment 3a-3e of a polyline. The information specifying these segments 3a-3e of polylines may be provided to an ADAS or any other processing device 30 for controlling a driving operation of the vehicle 1.

The reliability of a detection of objects in the environment of vehicle 1 may depend on many conditions. For example, a detection of an object by a radar sensor may depend on an orientation of an outer surface of the object with respect to the radar sensor. Thus, it may be possible that an object in the environment of vehicle 1 may be not detected if a radar signal emitted by the radar sensor 20 of vehicle 1 is not reflected in the direction of the radar sensor. Hence, the reliability for detecting an object may even vary when the vehicle 1 and/or the object is moving.

Figure 2a shows an example illustrating the variation of object detections in an environment of vehicle 1. As shown in Fig. 2a, a number of five polyline segments S1a to S5a are detected. These polyline segments S1a to S5a may be used for specifying a borderline of driving pass of the vehicle 1.

Figure 2b shows a result of a detection at a later point in time. For example, vehicle 1 may be moved forward and/or some of the objects in the environment of vehicle 1 may be moved. As can be seen in figure 2b, the result of the detection leads to a significantly different arrangement of the polyline segments S1b and S3b to S6b. Such a change in the detected segments of a polyline may cause difficulties or even instabilities in the further processing of such a result.

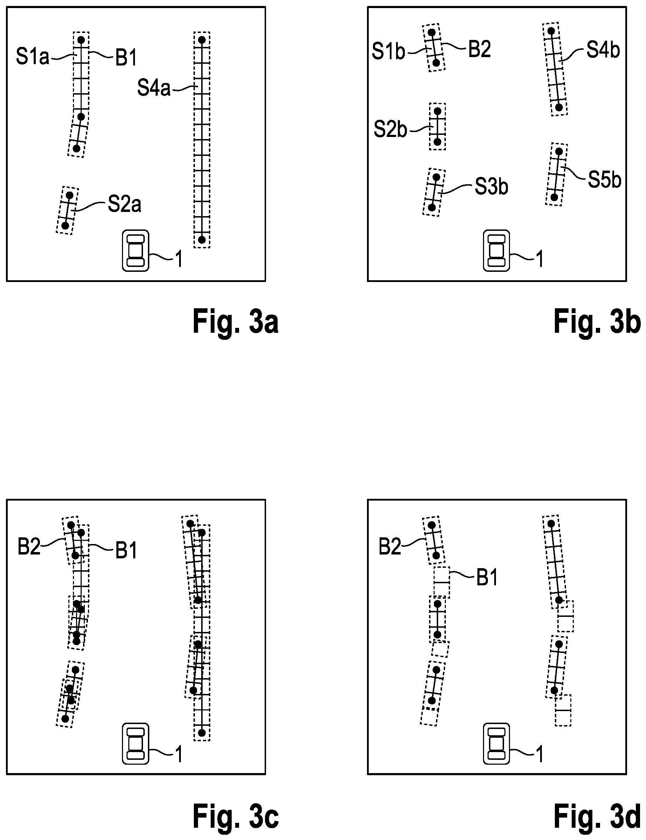

In order to obtain a more reliable and stable result of polylines, for example polylines specifying a borderline of a driving path or the like, in the following an approach for tracking polylines is proposed. The tracking of polylines according to the proposed approach is described in connection with figures 3a to 3h.

Figure 3a shows a result of a first scanning cycle for scanning the environment. As can be seen in this figure 3a, three segments of polylines S1a, S2a and S4a are identified. The first polyline segment S1a is specified by the three nodes. The second segment S2a of a polyline is specified by the two nodes. The third segment of a polyline is specified by two further nodes.

A further scanning operation, for example at a later point in time, may lead to a different result. An example of such a further scanning operation is shown in figure 3b. In this example, five segments of polylines S1b to S5b are determined. Such a different result of a scanning operation may be caused due to a change of the position of the scanning system in the vehicle 1 and/or due to a movement of objects in the environment. However, further reasons for varying results of the scanning operation may be possible, too.

The approach for tracking polylines according to the present invention may start with an initial step. Such an initial step produces a number of virtual boxes along the initially determined polyline segments S1a, S2a and S4a. It is understood that the example of three polyline segments S1a, S2a and S4a is only for illustrative purpose and does not limit the invention.

The virtual boxes B1 may be squares or rectangles with a predetermined, same size. For example, in the context of identifying borderlines of a driving path for a vehicle, each edge of such a box will have a length of one meter. However, any other size for the virtual boxes may be possible, too. Especially, the size of the boxes may be set according to the respective use case.

The individual boxes may be oriented, for example, according to the direction of the respective segment S1a, S2a or S4a of the borderline. For example, two edges of each box may be parallel to the respective segment S1a, S2a, S4a, and the remaining two edges may be perpendicular to the respective segment S1a, S2a, S4a. The individual boxes may be placed in such a manner that the boxes are touching each other. However, it may be also possible that the individual boxes may slightly overlap, for example by a predetermined area.

The result of the virtual boxes which are placed along the individual segments S1a, S2a and S4a may be stored, for example, in a memory. Further, a count value or a weight factor may be assigned to each virtual box. The use of this count value or weight factor is explained on more detail below.

After receiving a result of a further scanning operation of the environment, in particular by receiving a further set of polyline segments S1b to S5b, the same approach for assigning virtual boxes along the polyline segments S1b to S5b is performed. The result of such a further assignment of virtual boxes is shown in figure 3b.

In a further step, the virtual boxes of a current cycle, i.e., the virtual boxes relating to the polyline segments of a current scan operation, are merged with virtual boxes of a previous cycle, in particular the virtual boxes relating to a previously processed polyline. The result of such a merging operation is illustrated in figure 3c. Accordingly, if an object or a part of an object disappears in a current scan operation, virtual boxes of a previous scan operation still exist at the respective positions.

Before merging the virtual boxes of a current cycle with virtual boxes of a previous cycle, the positions of the virtual boxes may be adapted according to a movement of the vehicle 1, in particular the sensor 20 or the sensor system used for scanning the environment.

In figures 3a-c, virtual boxes relating to a previous polyline are referenced by reference sign B1, and virtual boxes of a current cycle are referenced as B2.

After merging the virtual boxes of a current cycle with virtual boxes of a previous cycle, the result of this merging operation is analyzed in order to identify virtual boxes of the previous cycle which overlap with virtual boxes of a current cycle. Such overlapping boxes of a previous cycle are removed from the set of merged boxes, as illustrated in figure 3c.

In this connection, a virtual box of a previous cycle may be considered as an overlapping box if the virtual box of the previous cycle at least touches one of the boxes of the current cycle. However, it may be also possible to consider a virtual box as an overlapping box if the respective virtual box overlaps another box at least by a predetermined area, for example one percent, two percent, five percent or ten percent of the total area of a box.

Further to this, the counter or weight factor which may be assigned to each of the boxes may be increased. For example, a count value may be increased by one, each time when a previous box still exists in the result of the merged boxes. In this case, boxes of a previous cycle may be removed from the set of merged boxes if the count value exceeds a predetermined threshold. Alternatively, it may be also possible to use a weight factor in a same manner in order to identify virtual boxes of previous cycles which still exist in a current set of merged boxes. In this way it is possible to identify virtual boxes of previous cycles which do not represent an object in the current set of virtual boxes for a predetermined number of cycles or a predetermined period of time.

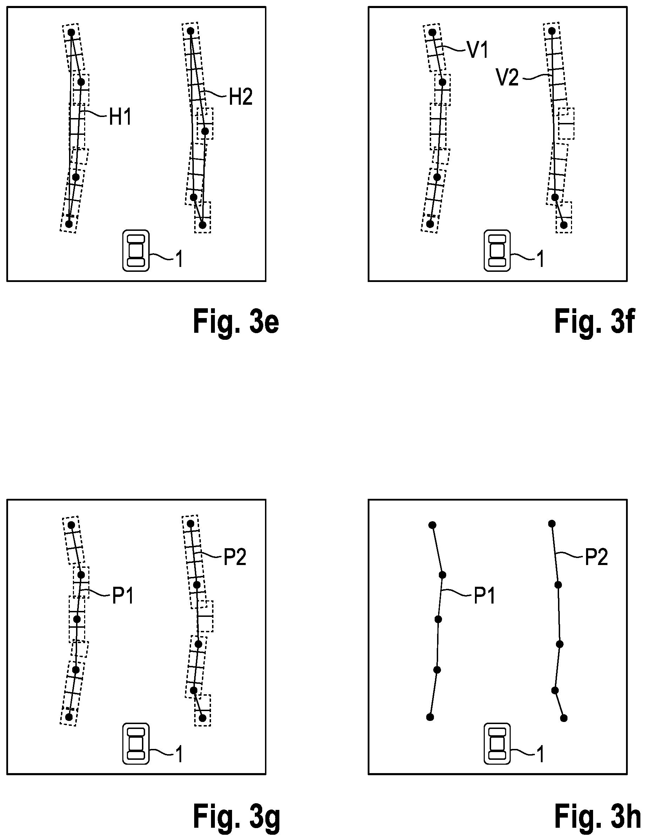

After the overlapping virtual boxes of the previous cycle are removed from the set of merged virtual boxes, a convex hull around the set of virtual boxes, in particular around the center of the virtual boxes is generated. The result of such generated convex hulls H1 and H2 is illustrated in figure 3e. Such a convex hull is a closed loop in form of a polygon having a convex outer shape.

In a next step, the visible parts of the generated convex hulls are identified. For this purpose, it is determined which part of the convex hull can be seen from a predetermined point of view, in particular from the position of the vehicle 1 or the sensor 20 or sensor system used by the vehicle 1. Accordingly, the part of the convex hull which cannot be seen from this point of view is removed. The remaining visible parts of the convex hull are referenced by V1 and V2 in figure 3f.

The resulting visible parts V1 and V2 of the convex hulls are used as a basis for generating the polyline of a current cycle. For this purpose, the resulting visible parts V1 and V2 are reshaped according to the positions of the virtual boxes in a set of merged virtual boxes. Accordingly, the resulting polylines may comprise multiple nodes at the center of the virtual boxes of the set of merged virtual boxes. In this way, the polylines P1 and P2 are obtained, as shown in figure 3g.

The final result of the generated polylines P1 and P2 according the approach described above is shown in figure 3h. The resulting polylines P1 and P2 may be used, for example as an input for controlling functionalities of a vehicle. For example, the polylines P1 and P2 may be used for controlling an autonomous vehicle or as an input of an advanced driver assistance system. However, any other manner for using the provided polylines P1 and P2 may be possible, too.

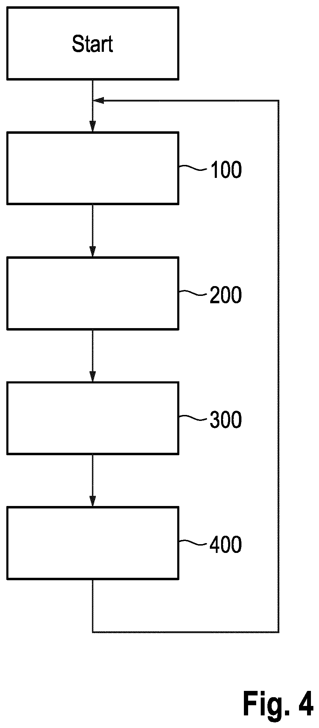

Figure 4 shows a flow diagram illustrating a method for tracking polylines. The method may comprise any step for performing operations as already described above. Accordingly, an apparatus 10 for tracking polylines may comprise any kind of appropriate device for performing the method steps as described below. In particular, an apparatus 10 for tracking polylines may comprise a processing device for performing the tracking operations and a memory for storing data of virtual boxes relating to previous cycles.

In an initial phase, segments of polylines are obtained and virtual boxes are assigned along the segments of the polyline. Additionally, a counter value or weight factor may be assigned to each virtual box. Data relating to the virtual boxes, for example the position, orientation, the count value or any other appropriate feature of the virtual boxes may be stored. In particular, the data relating to the virtual boxes may be stored in a memory.

After these initial operations for the first set of segments of polylines, the method may periodically repeat the following steps.

In a first step 100 segments relating to a current polyline are obtained. In a step 200 virtual boxes are assigned along the obtained segments of the current polyline. Next, in step 300 the virtual boxes relating to the segments of the current polyline are merged with virtual boxes relating to a previous polyline. In other words, the virtual boxes relating to the current segments of a polyline are merged with the stored virtual boxes of a step before. In this way, a set of merged virtual boxes is obtained. Further, a current polyline is processed in a step 400 based on the set of merged virtual boxes.

Each virtual box may have a same and predetermined size, for example same length of edges.

The virtual boxes may be oriented according to a direction of a corresponding segment of the current polyline.

In a possible embodiment, the merging of the virtual boxes may comprise a step of combining the virtual boxes relating to the line segments of the current polyline and the virtual boxes relating to the previous polyline. The merging step may further comprise identifying virtual boxes relating to the previous polyline which are overlapping with virtual boxes relating to the line segments of the current polyline. Further, the merging step may comprise removing the identified virtual boxes relating to the previous polyline which are overlapping with virtual boxes relating to the line segments of the current polyline.

In a possible embodiment, the virtual boxes relating to the previous polyline is identified as an overlapping virtual box, if an overlapping area between the virtual box relating to the line segments of the current polyline and the virtual box relating to the previous polyline exceeds a predetermined threshold value.

As already mentioned above, an individual count value may be assigned to each virtual box. The count value may be increased each time a previous box is merged into the set of virtual boxes. Based on the count value, a virtual box may be removed from the set of merged virtual boxes, if the count value of the respective virtual box exceeds a predetermined threshold value.

In a possible embodiment, the processing of the current polyline may comprise a step of generating a convex hull of the set of virtual boxes. The processing may further comprise a step of identifying a segment of the generated convex hull which is visible from a predetermined point of view. For example, this point of view may be a position of an ego-vehicle or a sensor or sensor system used for generating the polyline segments. The processing step may further comprise a step of generating the current polyline based on the set of virtual boxes and the identified segment of the generated convex hull which is visible from the predetermined point of view.

In a possible embodiment, the generating of the current polyline may comprise a step of reshaping the generated convex hull according to the set of virtual boxes.

In a possible embodiment, the method may further comprise a step of determining a movement of a point of view. The point of view may be a position of an ego-vehicle or a sensor or sensor system which is moving over time. Based on the determined movement the position of the previously determined virtual boxes may be adapted or compensated with respect to a current position.

Summarizing, the present invention relates to a tracking of polylines. A current polyline is processed by assigning virtual boxes to segments of a current polyline and merging these virtual boxes with virtual boxes relating to polylines of a previous processing task. In this way, a stable and reliable tracking of polylines can be achieved. The polylines may be used, for example, for advanced driver assistance systems or a fully automated driving of a vehicle.

### LIST OF REFERENCE SIGNS

- 1: vehicle

- 2a ... 2e: objects
- 3a ... 3e: segment of polyline

- 10: apparatus for tracking polylines
- 20: sensor
- 30: control device

- S1a ... S6b: segments of polyline
- B1, B2: virtual boxes
- H1, H2: convex hull
- V1, V2: visible part of convex hull
- P1, P2: polylines

- 100 .. 400: method steps

## Claims

1. Method for tracking a polyline, carried out by a processing device, comprising:
obtaining (100) line segments relating to a current polyline by a sensor device (20) in a current detection cycle, wherein a polyline specifying a boundary of a driving path or a drivable area of a vehicle;
assigning (200) virtual boxes (B2) along the obtained line segments relating to the current polyline, the virtual boxes (B2) being oriented according to a direction of a corresponding line segment of the current polyline, wherein a center of a virtual box is located on the respective line segment of a current polyline with two edges of the virtual box in form of a square or rectangle oriented parallel to the respective line segment, and the remaining two edges oriented perpendicular to the respective line segment;
merging (300) the virtual boxes (B2) along the line segments relating to the current polyline with virtual boxes (B1) along a previous polyline of previous detection cycles relative to the current polyline, to obtain a set of merged virtual boxes, in order to compensate temporarily disappearing objects by the respective virtual boxes (B1) of the previous detection cycles; and
processing (400) a current polyline (P1, P2) based on the set of merged virtual boxes.

2. Method according to claim 1, wherein each virtual box (B1, B2) has a same predetermined size.

3. Method according to any of claims 1 or 2, wherein merging (300) the virtual boxes comprises:
combining the virtual boxes (B2) along the line segments relating to the current polyline and the virtual boxes (B1) along the previous polyline,
identifying virtual boxes (B1) along the previous polyline which are overlapping with virtual boxes (B2) along the line segments relating to the current polyline, and
removing the identified virtual boxes (B1) along the previous polyline which are overlapping with virtual boxes (B2) along the line segments of the current polyline.

4. Method according to any of claims 1 to 3, wherein a virtual box (B1) along the previous polyline is identified as an overlapping virtual box, if an overlapping area between a virtual box (B2) along the line segments relating to the current polyline and the virtual box (B1) along the previous polyline exceeds a predetermined threshold value.

5. Method according to any of claims 1 to 4, wherein an individual count value is assigned to each virtual box (B1, B2),
the count value of a virtual box (B1) is increased each time a previous virtual box (B1) is merged into the set of virtual boxes, and
a virtual box (B1, B2) is removed from the set of merged virtual boxes if the count value of the respective virtual box (B1) exceeds a predetermined threshold value.

6. Method according to any of claims 3 to 5, wherein processing (400) the current polyline comprises:
generating a convex hull (H1, H2) of the set of merged virtual boxes in which identified overlapping virtual boxes are removed;
identifying a segment (V1, V2) of the generated convex hull (H1, H2) which is visible from a predetermined point of view; and
generating the current polyline (P1, P2) based on the set of merged virtual boxes in which identified overlapping virtual boxes are removed and the identified segment (V1, V2) of the generated convex hull (H1, H2) which is visible from a predetermined point of view.

7. Method according to any of claims 1 - 6, wherein generating the current polyline comprises reshaping the generated convex hull (H1, H2) according to the set of merged virtual boxes in which identified overlapping virtual boxes are removed.

8. Method according to any of claims 1 to 7, wherein the method further comprises
determining a movement of a point of view between a point in time when the virtual boxes (B1) along the previous polyline are processed and a point in time when the segments of the current polyline are obtained, and
compensating a position of the virtual boxes (B!) along the previous polyline based on the determined movement.

9. Apparatus (10) for tracking a polyline, comprising:
a processing device configured to:
receive line segments of a current polyline, by a sensor device (20) in a current detection cycle, wherein a polyline specifying a boundary of a driving path or a drivable area of a vehicle;
assign virtual boxes (B2) along the received line segments of the current polyline, the virtual boxes being oriented according to a direction of a corresponding line segment of the current polyline,
wherein a center of a virtual box is located on the respective line segment of a current polyline with two edges of the virtual box in form of a square or rectangle oriented parallel to the respective line segment, and the remaining two edges oriented perpendicular to the respective line segment;
merge the virtual boxes (B2) along the line segments of the current polyline with virtual boxes (B1) along a previous polyline of previous detection cycles relative to the current polyline, to obtain a set of merged virtual boxes, in order to compensate temporarily disappearing objects by the respective virtual boxes (B1) of the previous detection cycles and
process a current polyline based on the set of merged virtual boxes; and
a memory configured to store data of virtual boxes (B1) of a previous polyline of previous detection cycles.

10. Advanced driver assistance system, comprising:
a sensor device (20) configured to acquire environmental data and to provide line segments of a polyline based on the acquired environmental data; and
an apparatus (10) for tracking a polyline according to claim 9.

11. Advanced driver assistance system according to claim 10, comprising:
a control device (30) configured to control at least one driving functionality of a vehicle (1) based on the current polyline provided by the apparatus (10) for tracking a polyline.

12. Advanced driver assistance system according to claim 10 or 11, wherein the sensor device (20) comprises a radar sensor, and
wherein each line segment of the polyline relates to a group of one or more targets identified by the radar sensor (20).

## Patentansprüche

1. Verfahren zum Verfolgen einer Polylinie, das von einer Verarbeitungsvorrichtung ausgeführt wird, umfassend:
Erhalten (100) von Liniensegmenten betreffend eine aktuelle Polylinie durch eine Sensorvorrichtung (20) in einem aktuellen Erkennungszyklus, wobei eine Polylinie eine Begrenzung eines Fahrwegs oder eines befahrbaren Bereichs eines Fahrzeugs angibt;
Zuweisen (200) von virtuellen Feldern (B2) entlang der erhaltenen Liniensegmente betreffend die aktuelle Polylinie, wobei die virtuellen Felder (B2) gemäß einer Richtung eines entsprechenden Liniensegments der aktuellen Polylinie ausgerichtet sind, wobei sich ein Mittelpunkt eines virtuellen Felds auf dem jeweiligen Liniensegment einer aktuellen Polylinie befindet, wobei zwei Kanten des virtuellen Felds in Form eines Quadrats oder Rechtecks parallel zu dem jeweiligen Liniensegment ausgerichtet sind und die verbleibenden zwei Kanten senkrecht zu dem jeweiligen Liniensegment ausgerichtet sind;
Zusammenführen (300) der virtuellen Felder (B2) entlang der Liniensegmente betreffend die aktuelle Polylinie mit virtuellen Feldern (B1) entlang einer vorherigen Polylinie aus vorherigen Erkennungszyklen relativ zu der aktuellen Polylinie, um einen Satz von zusammengeführten virtuellen Feldern zu erhalten, um vorübergehend verschwindende Objekte durch die jeweiligen virtuellen Felder (B1) der vorherigen Erkennungszyklen zu kompensieren; und
Verarbeiten (400) einer aktuellen Polylinie (P1, P2) basierend auf dem Satz von zusammengeführten virtuellen Feldern.

2. Verfahren nach Anspruch 1, wobei jedes virtuelle Feld (B1, B2) eine gleiche vorbestimmte Größe aufweist.

3. Verfahren nach einem der Ansprüche 1 oder 2, wobei Zusammenführen (300) der virtuellen Felder Folgendes umfasst:
Kombinieren der virtuellen Felder (B2) entlang der Liniensegmente betreffend die aktuelle Polylinie und der virtuellen Felder (B1) entlang der vorherigen Polylinie, Identifizieren von virtuellen Feldern (B1) entlang der vorherigen Polylinie, die mit virtuellen Feldern (B2) entlang der Liniensegmente betreffend die aktuelle Polylinie überlappen, und
Entfernen der identifizierten virtuellen Felder (B1) entlang der vorherigen Polylinie, die mit virtuellen Feldern (B2) entlang der Liniensegmente der aktuellen Polylinie überlappen.

4. Verfahren nach einem der Ansprüche 1 bis 3, wobei ein virtuelles Feld (B1) entlang der vorherigen Polylinie als ein überlappendes virtuelles Feld identifiziert wird, wenn ein Überlappungsbereich zwischen einem virtuellen Feld (B2) entlang der Liniensegmente betreffend die aktuelle Polylinie und dem virtuellen Feld (B1) entlang der vorherigen Polylinie einen vorbestimmten Schwellenwert überschreitet.

5. Verfahren nach einem der Ansprüche 1 bis 4, wobei jedem virtuellen Feld (B1, B2) ein individueller Zählwert zugewiesen wird,
der Zählwert eines virtuellen Felds (B1) jedes Mal erhöht wird, wenn ein vorheriges virtuelles Feld (B1) in den Satz von virtuellen Feldern zusammengeführt wird, und ein virtuelles Feld (B1, B2) aus dem Satz von zusammengeführten virtuellen Feldern entfernt wird, wenn der Zählwert des jeweiligen virtuellen Felds (B1) einen vorbestimmten Schwellenwert überschreitet.

6. Verfahren nach einem der Ansprüche 3 bis 5, wobei Verarbeiten (400) der aktuellen Polylinie Folgendes umfasst:
Erzeugen einer konvexen Hülle (H1, H2) des Satzes von zusammengeführten virtuellen Feldern, in dem identifizierte überlappende virtuelle Felder entfernt sind;
Identifizieren eines Segments (V1, V2) der erzeugten konvexen Hülle (H1, H2), das von einem vorbestimmten Blickpunkt aus sichtbar ist; und
Erzeugen der aktuellen Polylinie (P1, P2) basierend auf dem Satz von zusammengeführten virtuellen Feldern, in dem identifizierte überlappende virtuelle Felder entfernt sind, sowie dem identifizierten Segment (V1, V2) der erzeugten konvexen Hülle (H1, H2), das von einem vorbestimmten Blickpunkt aus sichtbar ist.

7. Verfahren nach einem der Ansprüche 1-6, wobei Erzeugen der aktuellen Polylinie Umformen der erzeugten konvexen Hülle (H1, H2) gemäß dem Satz von zusammengeführten virtuellen Feldern umfasst, in dem identifizierte überlappende virtuelle Felder entfernt sind.

8. Verfahren nach einem der Ansprüche 1 bis 7, wobei das Verfahren ferner Folgendes umfasst
Bestimmen einer Bewegung eines Blickpunkts zwischen einem Zeitpunkt, zu dem die virtuellen Felder (B1) entlang der vorherigen Polylinie verarbeitet werden, und einem Zeitpunkt, zu dem die Segmente der aktuellen Polylinie erhalten werden, und Kompensieren einer Position der virtuellen Felder (B!) entlang der vorherigen Polylinie basierend auf der bestimmten Bewegung.

9. Einrichtung (10) zum Verfolgen einer Polylinie, umfassend:
eine Verarbeitungsvorrichtung, die zu Folgendem konfiguriert ist:
Empfangen von Liniensegmenten einer aktuellen Polylinie durch eine Sensorvorrichtung (20) in einem aktuellen Erkennungszyklus, wobei eine Polylinie eine Begrenzung eines Fahrwegs oder eines befahrbaren Bereichs eines Fahrzeugs angibt;
Zuweisen von virtuellen Feldern (B2) entlang der empfangenen Liniensegmente der aktuellen Polylinie, wobei die virtuellen Felder gemäß einer Richtung eines entsprechenden Liniensegments der aktuellen Polylinie ausgerichtet sind,
wobei sich ein Mittelpunkt eines virtuellen Felds auf dem jeweiligen Liniensegment einer aktuellen Polylinie befindet, wobei zwei Kanten des virtuellen Felds in Form eines Quadrats oder Rechtecks parallel zu dem jeweiligen Liniensegment ausgerichtet sind und die verbleibenden zwei Kanten senkrecht zu dem jeweiligen Liniensegment ausgerichtet sind;
Zusammenführen der virtuellen Felder (B2) entlang der Liniensegmente der aktuellen Polylinie mit virtuellen Feldern (B1) entlang einer vorherigen Polylinie aus vorherigen Erkennungszyklen relativ zu der aktuellen Polylinie, um einen Satz von zusammengeführten virtuellen Feldern zu erhalten, um vorübergehend verschwindende Objekte durch die jeweiligen virtuellen Felder (B1) der vorherigen Erkennungszyklen zu kompensieren, und Verarbeiten einer aktuellen Polylinie basierend auf dem Satz von zusammengeführten virtuellen Feldern; und
einen Speicher, der zum Speichern von Daten von virtuellen Feldern (B1) einer vorherigen Polylinie aus vorherigen Erkennungszyklen konfiguriert ist.

10. Erweitertes Fahrerassistenzsystem, umfassend:
eine Sensorvorrichtung (20), die zum Erfassen von Umgebungsdaten und
Bereitstellen von Liniensegmenten einer Polylinie basierend auf den erfassten Umgebungsdaten konfiguriert ist; und
eine Einrichtung (10) zum Verfolgen einer Polylinie nach Anspruch 9.

11. Erweitertes Fahrerassistenzsystem nach Anspruch 10, umfassend:
eine Steuervorrichtung (30), die zum Steuern mindestens einer Fahrfunktion eines Fahrzeugs (1) basierend auf der von der Einrichtung (10) zum Verfolgen einer Polylinie bereitgestellten aktuellen Polylinie konfiguriert ist.

12. Erweitertes Fahrerassistenzsystem nach Anspruch 10 oder 11, wobei die Sensorvorrichtung (20) einen Radarsensor umfasst und
wobei jedes Liniensegment der Polylinie eine Gruppe von einem oder mehreren von dem Radarsensor (20) identifizierten Zielen betrifft.

## Revendications

1. Procédé de suivi d'une polyligne, mis en œuvre par un dispositif de traitement, comprenant :
l'obtention (100) de segments de ligne relatifs à une polyligne actuelle par un dispositif capteur (20) dans un cycle de détection actuel, dans lequel une polyligne spécifiant une limite d'une voie de conduite ou d'une zone praticable d'un véhicule ;
l'assignation (200) de boîtes virtuelles (B2) le long des segments de ligne obtenus relatifs à la polyligne actuelle, les boîtes virtuelles (B2) étant orientées selon une direction d'un segment de ligne correspondant de la polyligne actuelle, dans lequel un centre d'une boîte virtuelle est situé sur le segment de ligne respectif d'une polyligne actuelle avec deux bords de la boîte virtuelle sous forme de carré ou de rectangle orientés parallèlement au segment de ligne respectif, et les deux bords restants orientés perpendiculairement au segment de ligne respectif ;
la fusion (300) des boîtes virtuelles (B2) le long des segments de ligne relatifs à la polyligne actuelle avec les boîtes virtuelles (B1) le long d'une polyligne précédente des cycles de détection précédents par rapport à la polyligne actuelle, pour obtenir un ensemble de boîtes virtuelles fusionnées, afin de compenser des objets disparaissant temporairement par les boîtes virtuelles (B1) respectives des cycles de détection précédents ; et
le traitement (400) d'une polyligne actuelle (P1, P2) en fonction de l'ensemble des boîtes virtuelles fusionnées.

2. Procédé selon la revendication 1, dans lequel chaque boîte virtuelle (B1, B2) a une même taille prédéterminée.

3. Procédé selon l'une quelconque des revendications 1 ou 2, dans lequel la fusion (300) des boîtes virtuelles comprend :
la combinaison des boîtes virtuelles (B2) le long des segments de ligne relatifs à la polyligne actuelle et des boîtes virtuelles (B1) le long de la polyligne précédente,
l'identification de boîtes virtuelles (B1) le long de la polyligne précédente qui chevauchent les boîtes virtuelles (B2) le long des segments de ligne relatifs à la polyligne actuelle, et
la suppression des boîtes virtuelles (B1) identifiées le long de la polyligne précédente qui chevauchent les boîtes virtuelles (B2) le long des segments de ligne relatifs à la polyligne actuelle.

4. Procédé selon l'une quelconque des revendications 1 à 3, dans lequel une boîte virtuelle (B1) le long de la polyligne précédente est identifiée comme une boîte virtuelle chevauchante, si une zone de chevauchement entre une boîte virtuelle (B2) le long des segments de ligne relatifs à la polyligne actuelle et la boîte virtuelle (B1) le long de la polyligne précédente dépasse une valeur seuil prédéterminée.

5. Procédé selon l'une quelconque des revendications 1 à 4, dans lequel une valeur de comptage individuelle est assignée à chaque boîte virtuelle (B1, B2),
la valeur de comptage d'une boîte virtuelle (B1) est incrémentée chaque fois qu'une boîte virtuelle (B1) précédente est fusionnée dans l'ensemble de boîtes virtuelles, et une boîte virtuelle (B1, B2) est supprimée de l'ensemble des boîtes virtuelles fusionnées si la valeur de comptage de la boîte virtuelle (B1) respective dépasse une valeur seuil prédéterminée.

6. Procédé selon l'une quelconque des revendications 3 à 5, dans lequel le traitement (400) de la polyligne actuelle comprend :
la génération d'une enveloppe convexe (H1, H2) de l'ensemble de boîtes virtuelles fusionnées dans lequel des boîtes virtuelles chevauchantes identifiées sont supprimées ;
l'identification d'un segment (V1, V2) de l'enveloppe convexe (H1, H2) générée qui est visible d'un point de vue prédéterminé ; et
la génération de la polyligne actuelle (P1, P2) en fonction de l'ensemble de boîtes virtuelles fusionnées dans lequel des boîtes virtuelles chevauchantes identifiées sont supprimées et du segment (V1, V2) identifié de l'enveloppe convexe (H1, H2) générée qui est visible d'un point de vue prédéterminé.

7. Procédé selon l'une quelconque des revendications 1 à 6, dans lequel la génération de la polyligne actuelle comprend le remodelage de l'enveloppe convexe (H1, H2) générée selon l'ensemble de boîtes virtuelles fusionnées dans lequel des boîtes virtuelles chevauchantes identifiées sont supprimées.

8. Procédé selon l'une quelconque des revendications 1 à 7, dans lequel le procédé comprend en outre
la détermination d'un déplacement d'un point de vue entre un instant où les boîtes virtuelles (B1) le long de la polyligne précédente sont traitées et un instant où les segments de la polyligne actuelle sont obtenus, et
la compensation d'une position des boîtes virtuelles (B!) le long de la polyligne précédente en fonction du déplacement déterminé.

9. Appareil (10) de suivi d'une polyligne, comprenant :
un dispositif de traitement configuré pour :
recevoir des segments de ligne d'une polyligne actuelle par un dispositif capteur (20) dans un cycle de détection actuel, dans lequel une polyligne spécifiant une limite d'une voie de conduite ou d'une zone praticable d'un véhicule ;
assigner des boîtes virtuelles (B2) le long des segments de ligne reçus de la polyligne actuelle, les boîtes virtuelles étant orientées selon une direction d'un segment de ligne correspondant de la polyligne actuelle,
dans lequel un centre d'une boîte virtuelle est situé sur le segment de ligne respectif d'une polyligne actuelle avec deux bords de la boîte virtuelle sous forme de forme de carré ou de rectangle orientés parallèlement au segment de ligne respectif, et les deux bords restants étant orientés perpendiculairement au segment de ligne respectif ;
fusionner les boîtes virtuelles (B2) le long des segments de ligne de la polyligne actuelle avec les boîtes virtuelles (B1) le long d'une polyligne précédente de cycles de détection précédents par rapport à la polyligne actuelle, pour obtenir un ensemble de boîtes virtuelles fusionnées, afin de compenser des objets disparaissant temporairement par les boîtes virtuelles (B1) respectives des cycles de détection précédents et traiter une polyligne actuelle en fonction de l'ensemble de boîtes virtuelles fusionnées ; et
une mémoire configurée pour stocker des données de boîtes virtuelles (B1) d'une polyligne précédente de cycles de détection précédents.

10. Système avancé d'assistance au conducteur, comprenant :
un dispositif capteur (20) configuré pour acquérir des données environnementales et fournir des segments de ligne d'une polyligne en fonction des données environnementales acquises ; et
un appareil (10) pour suivre une polyligne selon la revendication 9.

11. Système avancé d'assistance au conducteur selon la revendication 10, comprenant :
un dispositif de commande (30) configuré pour commander au moins une fonctionnalité de conduite d'un véhicule (1) en fonction de la polyligne actuelle fournie par l'appareil (10) pour le suivi d'une polyligne.

12. Système avancé d'assistance au conducteur selon la revendication 10 ou 11, dans lequel le dispositif capteur (20) comprend un capteur radar, et
dans lequel chaque segment de ligne de la polyligne se rapporte à un groupe d'une ou plusieurs cibles identifiées par le capteur radar (20).
